Europäisches Patentamt

European Patent Office

Office européen des brevets

(19)

(11) Veröffentlichungsnummer: **0 133 931**
**B1**

(12) **EUROPÄISCHE PATENTSCHRIFT**

(45) Veröffentlichungstag der Patentschrift:
**07.01.87**

(21) Anmeldenummer: **84108189.6**

(22) Anmeldetag: **12.07.84**

(51) Int. Cl.⁴: **H 05 B 7/06**, F 27 D 11/10,
H 05 B 7/12

(54) **Kühlanordnung einer Bodenelektrode für einen Gleichstromlichtbogenofen.**

(30) Priorität: **28.07.83 CH 4136/83**

(43) Veröffentlichungstag der Anmeldung:
**13.03.85 Patentblatt 85/11**

(45) Bekanntmachung des Hinweises auf die Patenterteilung:
**07.01.87 Patentblatt 87/2**

(84) Benannte Vertragsstaaten:
**AT CH DE FR GB IT LI SE**

(56) Entgegenhaltungen:
**EP - A - 0 031 482**
**EP - A - 0 058 817**
**EP - A - 0 132 711**
**EP - A - 0 133 652**
**EP - A - 0 133 925**
**EP - A - 0 133 926**
**DE - A - 2 718 293**
**DE - C - 426 584**
**FR - A - 2 292 397**
**FR - A - 2 381 987**
**US - A - 3 717 713**

(73) Patentinhaber: **BBC Aktiengesellschaft Brown, Boveri & Cie., Haselstrasse, CH-5401 Baden (CH)**

(72) Erfinder: **Bühler, Karl, Oberdorfstrasse 28, CH-5415 Nussbaumen (CH)**

ACTORUM AG

## Beschreibung

Die Erfindung bezieht sich auf einen elektrischen Ofen nach dem Gattungsbegriff des Patentanspruchs 1. Ein derartiger Ofen ist beispielsweise aus der CH-PS 452 730 bekannt.

Die Fortschritte in der Entwicklung von Halbleiterbauelementen in den vergangenen Jahren waren Anlass dafür, Gleichstromlichtbogenöfen in zunehmendem Ausmass in der Eisen- und Stahlindustrie zur Erschmelzung, vornehmlich von Elektrostahl, einzusetzen.

Aufbau und Wirkungsweise von Gleichstromlichtbogenöfen sind beispielsweise aus der Zeitschrift „Stahl und Eisen", 103 (1983) Nr. 3, vom 14. Februar 1983, Seiten 133 bis 137 bekannt.

Zur Optimierung der elektrischen bzw. thermischen Verhältnisse hat es sich beim Gleichstromlichtbogenofen als vorteilhaft erwiesen, den Lichtbogen zwischen einer oder mehreren oberhalb des Schmelzgutes angeordneten Elektrode(n) und dem Schmelzgut selbst auszubilden. Für die Rückleitung des Gleichstromes ist mindestens eine im Boden des Ofens und mit der Schmelze in Berührung stehende Elektrode, die Bodenelektrode, vorgesehen.

Die Bodenelektrode ist einer anhaltenden sehr hohen thermischen Beanspruchung ausgesetzt, für welche sich Werkstoffe mit einem hohen Erweichungs- und Schmelzpunkt, beispielswiese Graphit, eignen. Bei Verwendung von Kohlenstoffelektroden wird aber die Schmelze einerseits aufgekohlt. Dies ist jedoch insbesondere bei der Herstellung von niedrig gekohlten Stählen unerwünscht. Andererseits wird die Kohlenstoffelektrode aufgezehrt, wodurch der Ofenboden geschwächt und die elektrische Leistungsübertragung ungünstig beeinflusst werden kann.

Nach dem Lösungsvorschlag der CH-PS 452 730 werden Bodenelektroden verwendet, deren mit der Schmelze in Verbindung stehende Zone auch dieselben chemischen Gehalte aufweist, wie die Schmelze selbst. Die Kühlung erfolgt dabei an dem dem Ofengefäss abgewandten Endbereich der Bodenelektrode durch Konvektion mit Luft, wobei dieser Endbereich aus einem Metall mit guten wärmeleitenden und stromführenden Eigenschaften, beispielsweise Kupfer, besteht. Es handelt sich hierbei um eine sogenannte Zweistoff-Bodenelektrode.

Mit dieser luftgekühlten Zweistoff-Bodenelektrode vermeidet man einerseits, dass bei einem eventuellen Durchbruch des Ofenherdes flüssiges Metall mit Flüssigkeit einer Kühlanordnung oder stromführenden Bauteilen der Bodenelektrode unterhalb des Ofengefässbodens in Kontakt treten kann und schaltet so von vornherein die Gefahr unvorhergesehener schwerwiegender Folgen aus. Andererseits muss aber ein relativ schwacher Kühleffekt in Kauf genommen werden, der den Anforderungen, die an eine Bodenelektrode im Dauerbetrieb des industriellen Einsatzes gestellt werden, keineswegs gewachsen ist, und zwar aus folgenden Gründen:

Der Betrieb eines Lichtbogenofens ist im wesentlichen durch fünf Verfahrensabläufe charakterisiert:
- die Chargierphase: ohne Strom; tiefe Temperatur
- die Einschmelzphase: hoher Strom; hohe Temperatur
- die Frisch- oder Feinungsphase: kleiner Strom; hohe Temperatur
- die Abstechphase: ohne Strom; hohe Temperatur
- die Nebenzeitphasen: ohne Strom; mittlere tiefe Temperatur

Insbesondere die in der Einschmelzphase entstehende Verlustwärme durch den Strom hat einen grösseren Wärmefluss in der Bodenelektrode und zwar in Richtung Ofengefässboden zur Folge. Zwischen der Chargierphase und Frisch- oder Feinungsphase kann demnach die Intensität des Wärmeangebotes in einem relativ weiten Bereich variieren. D.h. aber auch, dass die in der gekühlten Zone der Bodenelektrode herrschenden Temperaturen ebenfalls in einem relativ weiten Bereich variieren. Der unterschiedliche Wärmefluss in der Bodenelektrode bedeutet bei konstanter Länge der Bodenelektrode eine unterschiedliche Temperaturdifferenz zwischen deren gekühlter und mit der Schmelze in Berührung stehender Zone. Bei grösserem Wärmeangebot ist aber keine höhere Temperaturdifferenz vorhanden, da die Elektrode auf der Innenseite nicht wärmer sein kann als die Schmelzentemperatur. Oder anders ausgedrückt, es kann mehr Wärme nur dann transportiert werden, wenn die Bodenelektrode kürzer wird, d.h. abschmilzt.

Wenn nun, wie es bei Luftkühlung in einem weiten Bereich der Fall ist, die Temperatur der Kühlfläche bei grösserem Wärmeangebot wesentlich höher ist als bei geringerem Wärmeangebot, so kann die grössere Wärmemenge nur bei noch stärker verkürzter Länge der Bodenelektrode geführt werden, d.h. die Bodenelektrode schmilzt noch mehr ab. Daraus folgt, dass sich die Lageänderung der Grenzschicht Flüssig-Fest zwischen Schmelze und Bodenelektrode über eine relativ grosse Länge – in axialer Richtung betrachtet — erstreckt. Diese Lageänderung kann sich einmal in einem „Hineinwachsen" der Bodenelektrode in die Schmelze, oder, wie bereits ausgeführt, in einem Abschmelzvorgang in Richtung Ofengefässboden, äussern.

Dieser vorstehend geschilderte Vorgang beeinträchtigt die Haltbarkeit der Bodenelektrode in erheblichem Mass und führt zu einer frühzeitigen Zerstörung der die Bodenelektrode umgebenden feuerfesten Auskleidung des Ofengefässbodens. Damit die Bodenelektrode unter derart ungünstigen Betriebsbedingungen überhaupt funktionsfähig ist, muss sie entsprechend überdimensioniert werden. Dies wiederum beeinflusst die Verlustleistung in nachteiliger Weise.

Darüber hinaus ist Kühlerleistung den betrieblichen Erfordernissen anzupassen. Diese kann einmal erhöht werden, durch eine Überdimensionierung eines Luftkühlers. Dies würde jedoch auf die Dauer zu unbefriedigenden Ergebnissen führen.

Andererseits bietet sich eine Flüssigkeitskühlung in hervorragender Weise für die Kühlung einer Bodenelektrode an. Hierbei müssen aber entsprechende Schutzvorkehrungen getroffen werden, damit flüssiges Metall nicht mit Kühlflüssigkeit in Berührung kommt.

Der Erfindung liegt die Aufgabe zugrunde, einen elektrischen Ofen der eingangs genannten Art zu schaffen, bei dem die Bodenelektrode optimal gekühlt ist, die Kühleinrichtung wirtschaftlich herzustellen und leicht auswechselbar ist und ein hohes Mass an betrieblicher Sicherheit bietet.

Die Lösung dieser Aufgabe erfolgt durch die im Patentanspruch 1 gekennzeichnete Erfindung.

Wesentliches Merkmal der Erfindung ist, dass das Anschlussstück als Kontakthülse ausgebildet ist und sich die Kontaktfläche(n) der Kontakthülse konisch sich in Richtung des Ofengefässbodens erweitern.

Durch Paarung des Aussenkegelstumpfes der Bodenelektrode mit dem Innenkegelstumpf der Kontakthülse wird ein einwandfreier elektrischer und thermischer Kontakt zwischen Bodenelektrode und Kontakthülse erzielt.

Bei der Weiterbildung der Erfindung sind gegen die Elektrode hin verschlossene Kühlkanäle für eine Flüssigkeitskühlung in der Kontakthülse angeordnet.

Hierdurch wird eine intensive Kühlung der Bodenelektrode erreicht, welche durch Verwendung von Kupfer, als sehr gut wärmeleitenden Werkstoff für die Kontakthülse und durch Ineinanderziehen beider Teile durch Schraubenkraft noch verstärkt wird.

Die Flüssigkeitskühlung erfolgt nur im Anschlussstück und nicht in der Elektrode selbst. Diese indirekte Kühlungsart der Bodenelektrode bietet weitgehende Sicherheit bei einem eventuellen Ofengefässdurchbruch, da die Flüssigkeitskühlung von der Bodenelektrode selbst entkoppelt ist. Einem Aufschmelzen der Kontakthülse wird somit weitgehend entgegengewirkt bzw. ein Aufschmelzen wird bei genügend starker Dimensionierung des Kühlflüssigkeitsflusses sogar verunmöglicht.

Gemäss der Weiterbildung der Erfindung ist in der Stirnwand des Anschlussstückes mindestens ein Durchbruch vorgesehen. Hierdurch wird der Ein- und Ausbau der Bodenelektrode wesentlich erleichtert, da weder das Anschlussstück noch die elektrischen Zuleitungen entfernt werden müssen. Die Auspressung einer verbrauchten Bodenelektrode an dem Ofengefässboden, und zwar von Aussen in das Ofengefässinnere erfolgt auf einfache Weise, indem beispielsweise ein Auspressstempel durch den Durchbruch in der Stirnwand des Anschlussstückes direkt auf die Stirnfläche der Bodenelektrode aufgesetzt, und die zum Ausstossen erforderliche Kraft auf der Bodenelektrode ausgeübt wird.

Als eine weitere Schutzmassnahme ist gemäss der Weiterbildung des Erfindungsgegenstandes eine Temperaturüberwachung an sich bekannter Art der Bodenelektrode selbst, z.B. mittels Thermoelementen, wie Bi-Metallthermostaten oder ähnlichem vorgesehen, wobei ein Eindringen der Schmelze direkt in oder an der Bodenelektrode detektiert wird und sofort Massnahmen, wie z.B. Abstellen der Kühlflüssigkeit eingeleitet werden können.

Die Erfindung wird nachstehend anhand eines Ausführungsbeispieles in der Zeichnung näher erläutert.

Es zeigt:

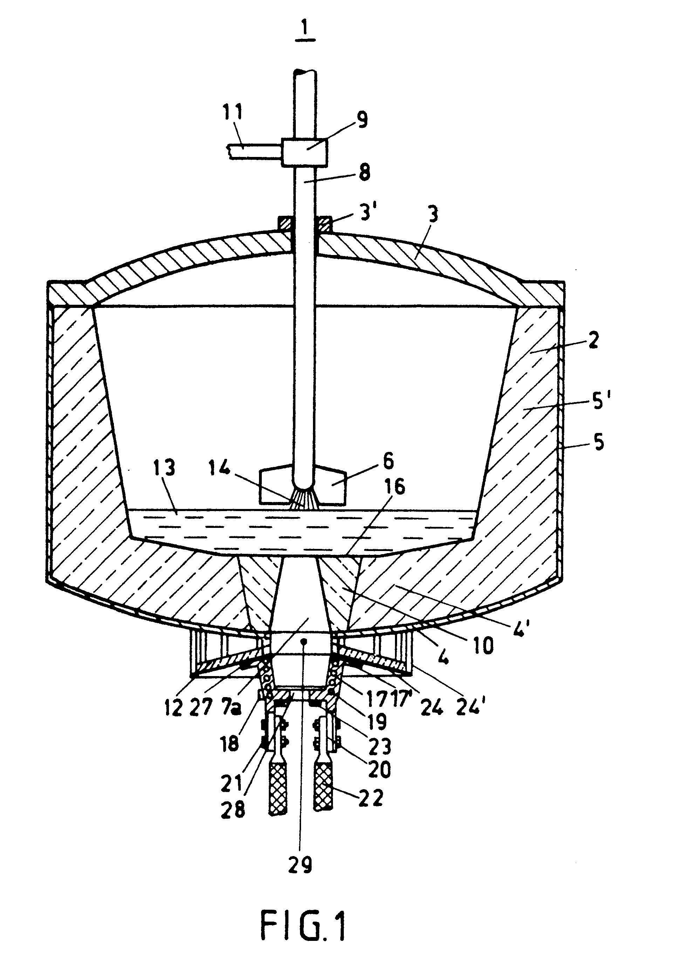

Fig. 1 einen Vertikalschnitt durch den elektrischen Ofen mit der erfindungsgemässen Bodenelektrode.

Fig. 1 zeigt den Lichtbogenofen 1 mit Ofengefäss 2 und Ofendeckel 3, wobei das Ofengefäss 2 aus dem Gefässboden 4, der Gefässwand 5, der feuerfesten Auskleidung des Ofenbodens 4', sowie der feuerfesten Auskleidung der Gefässwand 5' besteht. Oberhalb des Schmelzbades 13 ist eine Kohlenstoffelektrode 8 angeordnet, welche durch eine Öffnung des Ofendeckels 3 hindurchragt. Zur Kühlung der Elektrode 8 ist ein Kühlring 3' angeordnet. Die Elektrode 8 ist in einer Halterung 9 eines Elektrodentragarmes 11 gehalten. Der Elektrodentragarm 11 ist wiederum mit einer in Fig. 1 nicht dargestellten Elektrodenreguliereinrichtung verbunden.

In dem Ofengefäss 5, 5' befindet sich eine Ofentür 6 und zwischen der Elektrode 8 und dem Schmelzbad 13 ist ein Lichtbogen 14 ausgebildet.

Im Gefässboden 4, 4' ist die erfindungsgemässe Bodenelektrode 7a zu sehen, welche von dem sie ergänzenden Teil 10 aus feuerfestem Werkstoff hülsenartig umschlossen ist. In der beispielsweisen Ausführungsform gemäss Fig. 1 weist die Bodenelektrode 7a eine konische, sich in Richtung des gefässinneren verjüngende Form auf, welche sich vom Ofengefässboden 4 bis zur Ofenherdfläche 16 erstreckt. Im Gegensatz zur sich verjüngenden Gestalt der Bodenelektrode 7a, erweitert sich der sie ergänzende Teil 10 in Richtung des Gefässinneren hin. Die Bodenelektrode 7a wird unterhalb des Ofengefässbodens 4 durch ein wassergekühltes, als Kontakthülse ausgebildetes Anschlussstück 17 gehalten, welches gleichzeitig zur Verbindung der elektrischen Stromzuführung dient. Die Bodenelektrode 7a ist mittels einer Schraubverbindung 23 an der Stirnfläche des Anschlussstückes 17 befestigt. Die Bodenelektrode 7a liegt mit ihren konisch ausgebildeten Kontaktflächen an den ebenfalls konischen, zum Ofenboden 3 hin sich erweiternden inneren Kontaktflächen der Kontakthülse an, wodurch eine gute elektrische Verbindung und Wärmeleitung zwischen beiden Teilen 7a und 17 hergestellt wird. An dem Anschlussstück 17 sind Kontaktlaschen 20 angeordnet, die einstückig mit der Kontakthülse ausgebildet sind.

In Fig. 1 ist ein Teil des elektrischen Stromzuführungskabels 22 zu sehen, das mittels Schraubverbindung 21 mit den Kontaktlaschen 20 des Anschlussstückes 17 verbunden ist. Das Anschlussstück 17 ist mit Kühlkanälen 19 sowie mit einem Kühlkanaleintrittsstutzen 18 versehen. Eine Kühlflüssigkeit, vornehmlich Wasser, wird durch den Eintrittsstutzen 18 den Kühlkanälen 19 zugeführt.

Es durchströmt die Kühlkanäle 19 des Anschlussstückes 17 in spiralförmiger Anordnung aufwärts und kühlt somit die Bodenelektrode 7a auf indirekte Weise. Der Kühlflüssigkeitsaustrittsstutzen des Anschlussstückes 17 befindet sich auf der gleichen Ebene wie der Eintrittsstutzen 18 und ist deshalb in Fig. 1 nicht zu sehen.

Die Halterung der Bodenelektrode 7a geschieht mittels eines Befestigungsteiles, welche aus einem metallischen kegelstumpfartigen Abschirmdach 24 und vertikalen Haltetraversen 24' besteht, wobei das Abschirmdach 24 in bezug auf die Ofenachse mindestens im wesentlichen zentral und nach unten offen angeordnet und mittels der Haltetraversen 24' mit dem Ofengefässboden 4 fest verbunden ist. Die Bodenelektrode 7a ragt durch die Öffnung des Abschirmdaches hindurch und stützt sich auf der Kontakthülse ab, wobei das Anschlusstück 17 unter Einfügung einer elektrisch isolierenden Zwischenschicht 27 an der Unterseite des Abschirmdaches 24 befestigt ist.

Bei einer allfälligen Demontage der Bodenelektrode wird nur die Verschraubung 23 gelöst. An die, dem Gefässinneren abgewandten Stirnfläche der Bodenelektrode 7a wird beispielsweise ein in Fig. 1 nicht dargestellter Bolzen einer Auspressvorrichtung durch den Durchbruch 28 in der Stirnfläche 28 des Anschlussstückes 17 auf die Stirnfläche der Bodenelektrode 7a aufgesetzt und auf die Bodenelektrode 7a, mitsamt dem sie ergänzenden Teil 10 eine für den Ausstossvorgang erforderliche Kraft aufgebracht. Auf diese Weise kann die Bodenelektrode mitsamt dem sie umhüllenden Teil 10 leicht von aussen in das Ofengefässinnere hinein entfernt werden. Da im Gegensatz zu der, der Schmelze zugewandten Stirnfläche der Bodenelektrode die Stirnfläche auf der der Auspressstempel anliegt, genau definiert ist, so kann die Auspressung der Bodenelektrode aus dem Ofengefässboden 4, 4' in jedem Fall gut reproduzierbar wiederholt werden.

## Patentansprüche

1. Elektrischer Ofen, insbesondere Gleichstromlichtbogenofen zum Schmelzen von Metallen mit einer gekühlten Bodenelektrode (7a), mit mindestens einem unterhalb des Ofengefässbodens (4) sich befindenden Anschlusstück (17), dadurch gekennzeichnet, dass das Anschlussstück (17) als direkt oder indirekt gekühlte Kontakthülse ausgebildet ist, dass die Kontaktflächen der Kontakthülse sich konisch, in Richtung des Ofengefässbodens (4) erweitern, und dass die Kontakthülse das dem Ofengefässinneren abgewandte Endteil der Bodenelektrode (7a) umfasst.

2. Elektrischer Ofen nach Anspruch 1, dadurch gekennzeichnet, dass das Anschlussstück (17) mit gegen die Elektrode hin geschlossenen Kühlkanälen (19) zur Flüssigkeitskühlung versehen ist.

3. Elektrischer Ofen nach Anspruch 1 oder 2, dadurch gekennzeichnet, dass das Anschlussstück (17) vorzugsweise aus Kupfer besteht, und mittels einer Schraubverbindung (23) mit der Bodenelektrode (7a, b, c, d) verbunden ist.

4. Elektrischer Ofen nach einem der Ansprüche 1 bis 3, dadurch gekennzeichnet, dass in der Stirnwand des Anschlusstückes (17) mindestens ein Durchbruch (28) vorgesehen ist.

5. Elektrischer Ofen nach mindestens einem der Ansprüche 1 bis 4, dadurch gekennzeichnet, dass in der Bodenelektrode (7a, b, c, d) mindestens ein Temperaturmessfühler (29) vorgesehen ist.

## Claims

1. Electric furnace, in particular direct current arc furnace for the smelting of metals with a cooled bottom electrode (7a), with at least one connecting piece (17) located underneath the furnace vessel bottom (4), characterized in that the connecting piece (17) is designed as a directly or indirectly cooled contact sleeve, in that the contact areas of the contact sleeve widen conically in the direction of the furnace vessel bottom (4) and in that the contact sleeve surrounds the end portion of the bottom electrode (7a) remote from the furnace vessel interior.

2. Electric furnace according to Claim 1, characterized in that the connecting piece (17) is provided with cooling channels (19) for liquid cooling, closed toward the electrode.

3. Electric furnace according to Claim 1 or 2, characterized in that the connecting piece (17) preferably consists of copper and is connected to the bottom electrode (7a, b, c, d) by means of a screwed joint (23).

4. Electric furnace according to one of Claims 1 to 3, characterized in that at least one opening (28) is provided in the face wall of the connecting piece (17).

5. Electric furnace according to at least one of Claims 1 to 4, characterized in that at least one temperature sensor (29) is provided in the bottom electrode (7a, b, c d).

## Revendications

1. Four électrique, en particulier four à arc à courant continu pour la fusion de métaux, avec une électrode de fond (7a) refroidie, avec au moins une pièce de raccordement (17) se trouvant sous le fond (4) de la cuve du four, caractérisé en ce que la pièce de raccordement (17) est constituée par une douille de contact refroidie directement ou indirectement, en ce que les surfaces de contact de la douille de contact s'évasent en un cône en direction du fond (4) de la cuve du four, et en ce que la douille de contact entoure la partie terminale de l'électrode de fond (7a) située à l'opposé par rapport à l'intérieur de la cuve du four.

2. Four électrique suivant la revendication 1, caractérisé en ce que la pièce de raccordement (17) est pourvue de canaux de refroidissement (19) fermés à hauteur de l'électrode, pour le refroidissement par un liquide.

3. Four électrique suivant la revendication 1 ou 2, caractérisé en ce que la pièce de raccordement (17) est constituée de préférence de cuivre, et en ce qu'elle est fixée à l'électrode de fond (7a) au moyen d'un assemblage vissé (23).

4. Four électrique suivant l'une ou l'autre des revendications 1 à 3, caractérisé en ce qu'il est prévu au moins une percée (28) dans la paroi d'extrémité de la pièce de raccordement (17).

5. Four électrique suivant au moins une des revendications 1 à 4, caractérisé en ce qu'il est prévu au moins un capteur de température (29) dans l'électrode de fond (7a).

FIG.1